# EUROPÄISCHE PATENTSCHRIFT

(11) **EP 4 623 110 B1**
(45) Veröffentlichungstag und Bekanntmachung des Hinweises auf die Patenterteilung: **02.09.2026**
(21) Anmeldenummer: 23809521.0
(22) Anmeldetag: 17.11.2023
(51) Int. Cl.: C21B 3/06, C21C 1/02, C21C 5/36, C21C 5/54, C21C 7/00, C21C 7/064, C22B 7/04

(54) **VERFAHREN ZUR VERBESSERTEN SCHLACKEFÜHRUNG IN EINEM METALLURGISCHEN GEFÄSS**
METHOD FOR IMPROVED SLAG CONTROL IN A METALLURGICAL VESSEL
PROCÉDÉ DE RÉGULATION AMÉLIORÉE DES SCORIES DANS UN RÉCIPIENT MÉTALLURGIQUE

(30) Priorität: 24.11.2022 DE 102022212548
(43) Veröffentlichungstag der Anmeldung: 01.10.2025
(73) Patentinhaber: SMS Group GmbH, 41069 Mönchengladbach (DE)
(72) Erfinder: KHADHRAOUI, Sabrine, 40699 Erkrath (DE); DE FRIES, Uwe, 47506 Neukirchen-Vluyn (DE)
(74) Vertreter: Hemmerich & Kollegen
(86) Internationale Anmeldenummer: PCT/EP2023/082201
(87) Internationale Veröffentlichungsnummer: WO 2024/110332

(56) Entgegenhaltungen:
- JP-A- 2018 123 047
- JP-B2- 7 147 734
- US-A- 4 643 766
- US-A1- 2002 005 083

## Beschreibung

### Gebiet:

Die Erfindung betrifft ein Verfahren zur verbesserten Schlackeführung in einem metallurgischen Gefäß.

### Stand der Technik:

Phosphor als Begleitelement im Stahl oder anderen Metallen verschlechtert die mechanischen Eigenschaften des Stahls und muss daher so weit wie möglich reduziert werden. Dazu wird üblicherweise Sauerstoff in die flüssige metallische Schmelze eingeblasen und zusätzlich ein Schlackebildner mit Kalk eingeblasen oder auf die Oberfläche der metallischen Schmelze aufgebracht. Durch die Reaktion des Sauerstoffs mit der metallischen Schmelze bildet sich FeO und P₂O₅. Beider Reaktionsprodukte werden vom im Schlackebildner enthaltenem CaO aufgenommen und es bildet sich eine Schlackeschicht auf der Oberfläche der metallischen Schmelze. Dadurch reduziert sich der Phosphorgehalt in der metallischen Schmelze, Stahl u. Eisen 110 (1990) Nr. 5, S. 61 - 70. Die Patentdokumente JP 2018 123047 A und US 4 643 766 A offenbaren ferner ein Verfahren zur verbesserten Schlackenkontrolle in einem metallurgischen Behälter.

Im weiteren Prozessverlauf wird die mit Phosphor angereicherte Schlacke von der metallischen Schmelze getrennt, um eine erneute Phosphoraufnahme der metallischen Schmelze bei reduzierenden Prozessbedingungen zu vermeiden.

Aufgrund des Phosphorgehaltes einer derartigen Schlacke ist eine alternative Anwendung in der Metallurgie nur selten möglich, so dass die Schlacke üblicherweise auf einer Deponie entsorgt wird. Andererseits besteht der Bedarf an phosphatreichen mineralischen Düngemitteln für die Landwirtschaft.

### Aufgabe der Erfindung:

Aufgabe der Erfindung ist es daher, das bekannte Verfahren der Schlackeführung bei der Entphospherung einer Metallschmelze dahingehend weiterzuentwickeln, dass eine weiterverwendbare phosphatreiche Schlacke entsteht.

### Erfindung:

Die Aufgabe der Erfindung wird gelöst durch ein Verfahren mit den Merkmalen des Anspruchs 1. Das Verfahren zum Entphosphern einer metallischen Schmelze, insbesondere einer Eisenschmelze mit einem Phosphorgehalt von > 0,015 %, erfolgt in einem metallurgischen Gefäß mittels einer Schlacke und Sauerstoff. Das metallurgische Gefäß ist ein feuerfest zugestelltes Gefäß, in dem metallurgische Arbeit bzw. Prozesse erfolgen können. Der metallischen Schmelze wird in dem metallurgischen Gefäß ein kalkhaltiger Schlackebildner mit m_{CaO}/m_{Schm} 10 kg/t bis 35 kg/t zugeführt.

Schlackebildner sind im erfindungsgemäßen Sinne alle gezielt eingebrachten Einsatzstoffe in das Gefäß die die Schlacke in Menge und Zusammensetzung beeinflussen. Der Schlackebildner enthält im erfindungsgemäßen Sinne mehr als 60 % CaO. Die restlichen Bestandteile sind entweder Einsatzstoffe, wie beispielsweise CaF₂, zur gezielten Einstellung der Viskosität der Schlacke oder Einsatzstoffe die weiteren Eigenschaften der Schlacke beeinflussen. Dies kann beispielsweise MgO sein zum Reduzieren des Verschleißes an der feuerfesten Zustellung.

Die Zugabe in das metallurgische Gefäß kann als eine einzelne Zugabe der Gesamtmenge des Schlackebildners oder auch als eine Zugabe in mehreren Schritten erfolgen. Weiterhin kann die Zugabe des Schlackebildners auch kontinuierlich erfolgen.

Durch eine Reaktion des Kalks mit den oxidierten Bestandteilen der metallischen Schmelze stellt sich eine Schlackenzusammensetzung der gesamten Schlackenmenge mit zumindest den Bestandteilen (in Gew.-%) ein:
CaO: 10 % bis 60 %
FeO: 25 % bis 85 %
P₂O₅: 5 % bis 35 %,
sowie weiteren nicht vermeidbaren Bestandteilen.

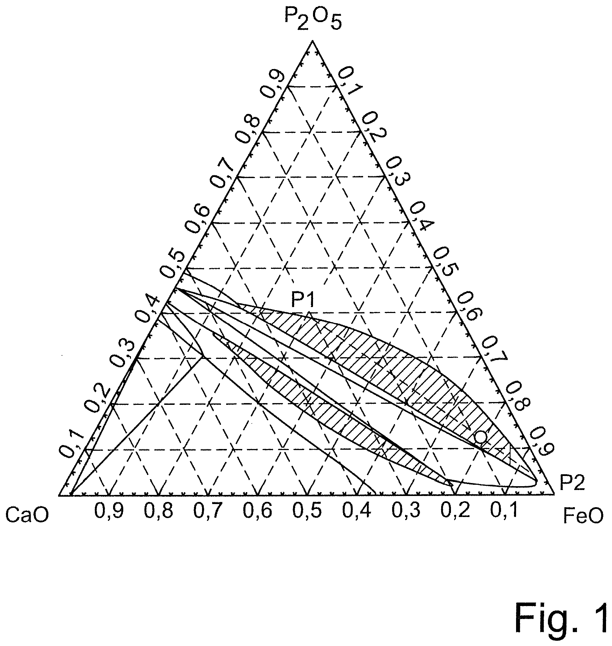

Die metallische Schmelze weist eine mittlere Temperatur von T_{S} > 1500°C auf. Bei der erfindungsgemäß eingestellt Schlackenzusammensetzung und T_{S} > 1500°C entstehen zumindest zwei Schlackephasen P1 und P2 mit jeweils unterschiedlichen Phosphorgehalten und unterschiedlichen Dichten, Fig. 1. Der Dichteunterschied der Phasen P1 und P2 beträgt aufgrund der unterschiedlichen Phasenbestandteile ca. 20 %.

Die metallische Schmelze und die Schlacke mit den verschiedenen Phasen werden im metallurgischen Gefäß beruhigt, beispielsweise durch Anpassen der Spülung oder durch auf die Metallschmelze wirkende induktive Methoden. Dadurch entmischen sich die im Gefäß enthaltenen unterschiedlichen dichten Phasen: metallische Schmelze, phosphorreiche Phase und phosphorarme Phase. Mittels einer mechanischen Vorrichtung, insbesondere eines Überlaufes, wird anschließend die leichte phosphorreiche Phase von den anderen beiden Phasen abgetrennt, wobei zumindest die metallische Schmelze auch im metallurgischen Gefäß verbleiben kann.

Insbesondere die kontinuierliche Zugabe der Schlackebildner und ein kontinuierlicher Ablauf der phosphorreichen Schlackephase durch einen Überlauf am Gefäß kann eine besonders gute Trennung der Phasen und ausreichende Reduzierung des Phosphorgehaltes in der metallischen Schmelze erzeugen.

Die phosphorreiche Schlacke kann, je nach Zusammensetzung und Umweltauflagen, anderweitig verwendet werden. Bei geeigneter Einstellung der Schlackenzusammensetzung und Reduzierung der Begleitelemente ist der Phosphorgehalt ausreichend, um als Düngemittel in der Landwirtschaft verwendet zu werden. Die phosphorreiche Phase kann darüber hinaus durch nachgeschaltete Prozesse behandelt werden, um schädliche Begleitelemente zu entfernen. Die verbleibende phosphorarme Schlacke kann im Gefäß verbleiben und für eine erneute Entphosperung einer metallischen Schmelze in dem gleichen Gefäß verwendet werden. Alternativ dazu kann die phosphorarme Schlacke auch gezielt abgestochen werden und in einem anderen Gefäß erneut eingesetzt werden.

Mechanische Vorrichtungen im erfindungsgemäßen Sinne können Überläufe, Siphons, besondere Abstichlöcher oder Öffnungen an den metallurgischen Gefäßen sein. Ebenfalls ist die Benutzung von externen mechanischen Hilfsmitteln, wie beispielsweise einer Kratze o.ä., davon umfasst. Die Wirkung der mechanischen Hilfsmittel kann unterstützt werden durch eine entsprechende Einstellung des Spülgases, beispielsweise im Sinne von Freispülen, oder anderer die Umwälzung im metallurgischen Gefäß beeinflussende Hilfsmittel.

Weitere bevorzugte Ausführungen des Verfahrens sind in den abhängigen Ansprüchen 2 bis 9 aufgeführt. Die Dauer der Beruhigung der metallischen Schmelze und der Schlacke beträgt zwischen t/m_{Schm} > 8 min/kg, vorzugsweise t/m_{Schm} > 15 min/kg. In diesem Zeitfenster findet eine effektive Auftrennung der Schlackephasen statt und die Abkühlung der metallischen Schmelze ist noch für die weiteren Prozessstufen vertretbar.

Die Schlacke weist im Mittel einen MgO-Gehalt (in Gew.-%) von 0,1 % bis 10 %, vorzugsweise 5% bis 8 % auf. Üblicherweise sind metallurgische Gefäße mit MgO-haltigen Steinen zugestellt. Durch das Einstellen einer Schlacke mit dem erfindungsgemäßen Gehalt und dem MgO-Gehalt kann dem Verschleiß in der Schlackezone des metallurgischen Gefäßes durch die verlängerte Prozesszeit entgegengewirkt werden.

Die Schlacke weist im Mittel einen CaF₂-gehalt von 0 % bis 7 % auf. Die Zugabe von CaF₂ reduziert die Viskosität der Schlacke und erleichtert dadurch das Auftrennen der beiden phosphorhaltigen Schlackephasen. Weiterhin erleichtert die verringerte Viskosität das Abtrennen der leichten phosphorreichen Phase. Diese Vorgehensweise ist besonders dann vorteilhaft, wenn ein MgO-Gehalt zwischen 0,1% und 10 % eingestellt wird, da MgO die Viskosität der Schlacke erhöht.

Das Verfahren wird bevorzugt in einem Lichtbogenofen durchgeführt. Bei dem Einsatz von phosphorreichen Einsatzstoffen, wie beispielsweise Roheisen, kann schon beim Aufschmelzen eine Entphosphorung des Stahls durchgeführt werden. Aufgrund der hohen Temperaturen im Lichtbogenofen sind die Schlacken sehr dünnflüssig und trennen sich leicht auf. Zusätzlich können im Lichtbogenofen aufgrund des Schlackeabstichs und der fein dosierbaren Neigung des Lichtbogenofens die beiden Phasen gut voneinander mechanisch getrennt werden.

Das Verfahren wird bevorzugt in einem Konverter durchgeführt. Im Konverter herrschen analog zum Lichtbogenofen üblicherweise hohe Temperaturen. Insofern ergeben sich dabei die gleichen Vorteile wie im Lichtbogenofen. Weiterhin können Konverter zusätzliche Abstichlöcher an der Seite aufweisen. In diesem Fall ist es möglich zunächst den Stahl, dann die dichtere phosphorarme Schlacke und dann die phosphorreiche Schlacke in unterschiedliche Pfannen abzustechen. Alternativ dazu kann in umgekehrter Reihenfolge auch über das Konvertermaul der Konverter entleert werden. Beide Möglichkeiten können auch in gemischter Form verwendet werden.

Das Verfahren wird bevorzugt in einer Pfanne durchgeführt. Pfannen in der Metallurgie sind zumeist schlanke Gefäße im Vergleich zu einem Lichtbogenofen oder einem Konverter. Durch die schlacke Form entstehen auch bei einer geringen absoluten Schlackemenge noch ausreichende Schichtdicken, die einer mechanischen Abtrennung zugänglich sind. Weiterhin sind in Pfannen üblicherweise Spülsteine oder Rühreinrichtungen verbaut, so dass das mechanische Abtrennen einfach unterstützt werden kann.

Das Verfahren wird bevorzugt in einem Induktionsofen durchgeführt. Induktionsöfen sind im Vergleich eher schlanke metallurgische Gefäße und insofern stellen sich ähnliche Vorteile wie bei der Anwendung des Verfahrens in der Pfanne ein.

Das Verfahren wird in einem metallurgischen Gefäß durchgeführt und die Metallschmelze wird induktiv beeinflusst. Die induktive Schmelzenbeeinflussung hat gegenüber dem Spülgas den Vorteil, dass keine Gase durch die Schlackenschichten durchdringen müssen. Insofern kann sich eine Trennschicht zwischen den beiden Schichten besser ausbilden und wird nicht gestört.

Der Beschreibung der Erfindung sind drei Figuren beigefügt.
- Figur 1:: Dreistoffdiagramm CaO - FeO - P₂O₅ bei T = 1600°C
- Figur 2:: Dreistoffdiagramm CaO - FeO - P₂O₅ bei T = 1600°C mit 7% MgO
- Figur 3:: Metallurgisches Gefäß mit Überlauf

Die Erfindung wird nachfolgend unter Bezugnahme auf die Figuren in Form von Ausführungsbeispielen detailliert beschrieben. In allen Figuren sind gleiche technische Merkmale mit gleichen Bezugszeichen bezeichnet.

Figur 1 ist ein Ausschnitt aus einem Dreistoffdiagramm des System CaO - FeO - P₂O₅ bei einer Temperatur von T = 1600°C dargestellt. Ausgehend von einem Phosphorgehalt im Stahl von ca. 0,2 % stellt sich in der Schlacke nach der Entphospherung der metallischen Schmelze 1 ein mittlerer Phosphorgehalt von ca. 10 % in der Schlacke ein. Bei einem FeO-Gehalt in der Schlacke zwischen ca. 10 % und ca. 30 % besteht eine Mischungslücke, so dass sich die Schlacke zwei Phasen P1 und P2 auftrennt. Die Zusammensetzung der beiden Phasen P1 und P2 ist beispielhaft in der Tabelle 1 angegeben.

**Tabelle 1: Schlackenzusammensetzungen der Phasen P1 und P2 gemäß Fig. 1.**

| Gehalt in Gew.-% | P1 | P2 |
|---|---|---|
| FeO | 25 | 85 |
| CaO | 40 | 9 |
| P₂O₅ | 34 | 2,7 |
| Verhältnis der Schlackenmengen zueinander | 0,19 | 0,81 |

Aufgrund der geringeren Dicht der Phase P1 gegenüber der Phase P2 schwimmt die Phase P1 auf und kann mechanisch abgetrennt werden Die Phase P2 enthält so wenig P₂O₅, dass diese in einem erneuten Prozess eingesetzt werden kann.

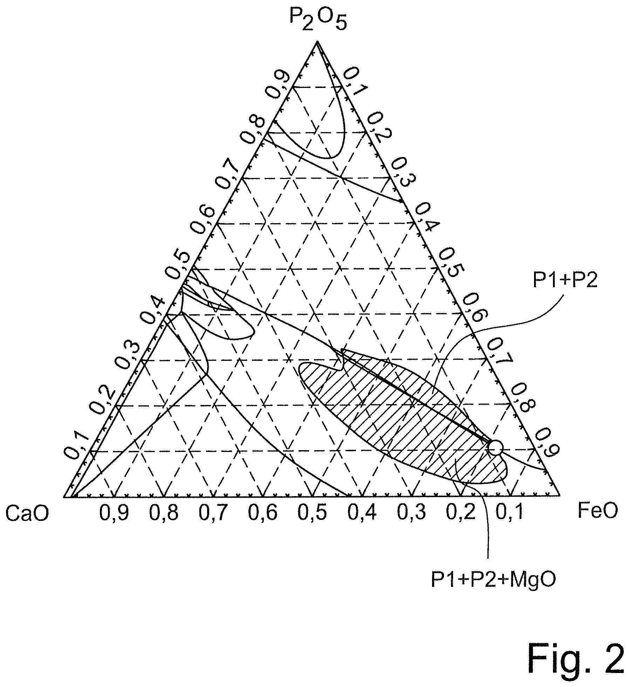

Figur 2 zeigt einen Ausschnitt aus einem Dreistoffdiagramm des System CaO - FeO - P₂O₅ bei einer Temperatur von T = 1600°C mit einem MgO-Gehalt von 7 %. Die Aufnahme von MgO in die Schlacke erfolgt üblicherweise durch den Abtrag von der feuerfesten Zustellung des verwendeten Gefäßes. Der MgO-Gehalt in der Schlacke wird dabei im Wesentlichen durch die vorherrschenden thermodynamischen Gleichgewichte im Gefäß bestimmt.

Bei manchen Prozessen wird gezielt ein MgO-Träger in die Schlacke eingebracht, um frühzeitig einen Gleichgewichtsnahen MgO-Gehalt in der Schlacke einzustellen. Der Verschleiß an der feuerfesten Zustellung wird dadurch reduziert.

In Abhängigkeit von den Verhältnissen den in der Schlacke enthaltenen Stoffen CaO, FeO und P₂O₅ kann eine Zusammensetzung eingestellt werden, bei der sich die Schlacke in zwei Phasen und eine feste MgO haltige Phase auftrennt. In diesem Beispiel ist der Gehalt der Phasen P1 ca. 20 %, P2 ca. 68 % und MgO-Phase ca. 12 %. Die leichte Phase P1 schwimmt auf und kann mechanisch abgetrennt werden.

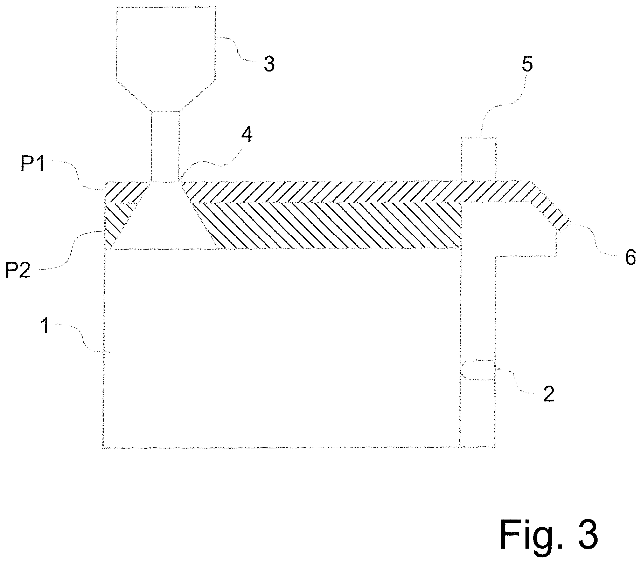

Figur 3 zeigt einen Teil eines metallurgischen Gefäßes 5 bei dem der Schlackebildner 4 kontinuierlich mit einer kontinuierlich fördernden Zugabeeinrichtung 3 zugegeben wird. Der Schlackebildner 4 schmilzt auf der Oberfläche der metallischen Schmelze 1 auf und kann in flüssiger Form über den Überlauf 6 ablaufen. Die Höhe des Überlaufes 6 ist so dimensioniert, dass ca. 80 % der geplanten gesamten Schlackemenge im Gefäß 5 verbleiben können und nicht über den Überlauf 6 ablaufen.

Durch eine Sauerstoffdüse 2 in der Seite des Gefäßes 5 wird das Eisen und der Phosphor der metallischen Schmelze 1 oxidiert. Die Oxide steigen an die Oberfläche der Schmelze und werden von der Schlackeschicht P2 aufgenommen und regieren zu den beiden erfindungsgemäßen Phasen P1 und P2. Die leichtere phosphorreiche Phase P1 läuft über den Überlauf 6 ab. Die fehlende Menge an Schlackenphase P2 wird kontinuierlich durch die Zugabe des Schlackebildner 4 ersetzt, so dass immer eine ausreichende Schlackemenge P2 vorhanden ist.

### Bezugszeichenliste:

- m_{Schm}: Masse der metallischen Schmelze
- m_{CaO}: Masse des Schlackebildners mit CaO
- P1: phosphorarme Schlacke
- P2: phosphorreiche Schlacke

- 1: Metallische Schmelze
- 2: Sauerstoffdüse
- 3: Kontinuierliche Zugabeeinrichtung für Schlackebildner
- 4: Schlackebildner
- 5: metallurgisches Gefäß
- 6: Überlauf

## Patentansprüche

1. Verfahren zum Entphosphern einer metallischen Schmelze (1), insbesondere einer Eisenschmelze mit einem Phosphorgehalt von > 0,015 %, in einem metallurgischen Gefäß (5) mittels einer Schlacke, wobei
- der metallischen Schmelze (1) im metallurgischen Gefäß (5) ein kalkhaltiger Schlackebildner mit m_{CaO}/m_{Schm} 10 kg/t bis 35 kg/t zugeführt wird zum Einstellen einer Schlackenzusammensetzung durch eine Reaktion des Kalks mit der metallischen Schmelze (1) mit zumindest den Bestandteilen der Schlacke (in Gew.-%):
CaO: 10 % bis 60 %
FeO: 25 % bis 85 %
P₂O₅: 5 % bis 35 %
sowie weiteren nicht vermeidbaren Bestandteilen; und
- die metallische Schmelze (1) eine Temperatur T_{S} > 1500°C aufweist,
**dadurch gekennzeichnet, dass**
- die metallische Schmelze (1) und die Schlacke im metallurgischen Gefäß (5) beruhigt werden zum Entmischen zumindest der unterschiedlichen dichten Phasen metallische Schmelze (1), phosphorreiche Phase (P1) und phosphorarme Phase (P2);
- die Dauer der Beruhigung t/m_{Schm} > 8 min/kg, vorzugsweise t/m_{Schm} > 15 min/kg beträgt;
- mittels einer mechanischen Vorrichtung, insbesondere eines Überlaufes (6), die leichteste phosphorreiche Phase (P1) von den anderen Phasen abgetrennt wird, wobei zumindest die metallische Schmelze (1) im metallurgischen Reaktor (5) verbleibt.

2. Verfahren nach Anspruch 1,
**dadurch gekennzeichnet, dass**
die Schlacke einen MgO-Gehalt (in Gew.-%) von 0,1 % bis 10 %, vorzugsweise 5% bis 8 % aufweist.

3. Verfahren nach einem der vorangegangenen Ansprüche,
**dadurch gekennzeichnet, dass**
die Schlacke einen CaF₂-gehalt von 0 % bis 7 % aufweist.

4. Verfahren nach einem der Ansprüche 1 bis 3,
**dadurch gekennzeichnet, dass**
das Verfahren in einem Lichtbogenofen durchgeführt wird.

5. Verfahren nach einem der Ansprüche 1 bis 3,
**dadurch gekennzeichnet, dass**
das Verfahren in einem Konverter durchgeführt wird.

6. Verfahren nach einem der Ansprüche 1 bis 3,
**dadurch gekennzeichnet, dass**
das Verfahren in einer Pfanne durchgeführt wird.

7. Verfahren nach einem der Ansprüche 1 bis 3,
**dadurch gekennzeichnet, dass**
das Verfahren in einem Induktionsofen durchgeführt wird.

8. Verfahren nach einem der vorangegangenen Ansprüche,
**dadurch gekennzeichnet, dass**
das Verfahren in einem metallurgischen Gefäß (5) durchgeführt wird, und
die Metallschmelze induktiv beeinflusst wird.

## Claims

1. Method for dephosphorisation of a metallic melt (1), particularly a ferrous melt with a phosphorus content of > 0.015%, in a metallurgical vessel (5) by means of a slag, wherein
- a calcareous slag former is added to the metallic melt (1) in the metallurgical vessel (5) at m_{CaO}/mₘₑₗₜ 10 kg/t to 35 kg/t in order to set a slag composition, by reaction of the lime with the metallic melt (1), with at least the slag components (in weight %):
CaO: 10% to 60%
FeO: 25% to 85%
P₂O₅: 5% to 35%
as well as further unavoidable constituents; and
- the metallic melt (1) has a temperature Ts > 1500° C,
**characterised in that**
- the metallic melt (1) and the slag in the metallurgical vessel (5) are allowed to settle for segregation of at least the phases of different density of the metallic melt (1) of phosphorus-rich phase (P1) and low-phosphorus phase (P2);
- the duration of the settling is t/mₘₑₗₜ > 8 min/kg, preferably t/mₘₑₗₜ > 15 min/kg;
- the lightest phosphorus-rich phase (P1) is separated from the other phases by means of a mechanical device, particularly an overflow (6), wherein at least the metallic melt (1) remains in the metallurgical reactor (5).

2. Method according to claim 1, **characterised in that**
the slag has an MgO content (in weight %) of 0.1% to 10%, preferably 5% to 8%.

3. Method according to one of the preceding claims, **characterised in that**
the slag has a CaF₂ content of 0% to 7%.

4. Method according to any one of claims 1 to 3, **characterised in that**
the method is conducted in an arc furnace.

5. Method according to any one of claims 1 to 3, **characterised in that**
the method is conducted in a converter.

6. Method according to any one of claims 1 to 3, **characterised in that**
the method is conducted in a ladle.

7. Method according to any one of claims 1 to 3, **characterised in that**
the method is conducted in an induction furnace.

8. Method according to any one of the preceding claims, **characterised in that**
the method is conducted in a metallurgical vessel (5) and the metal melt is influenced inductively.

## Revendications

1. Procédé de déphosphoration d'une masse fondue métallique (1), en particulier d'une masse fondue de fer ayant une teneur en phosphore > 0,015 %, dans un récipient métallurgique (5) au moyen d'un laitier, dans lequel
- un agent formateur de laitier calcaire avec M_{CaO}/m_{schm} allant de 10 kg/t à 35 kg/t est amené à la masse fondue métallique (1) dans le récipient métallurgique (5) pour régler une composition de laitier par une réaction de la chaux avec la masse fondue métallique (1) avec au moins les composants du laitier (en % en poids) :
CaO : 10 % à 60 %
FeO : 25 % à 85 %
P₂O₅ : 5 % à 35 %
ainsi que d'autres composants inévitables ; et
- la masse fondue métallique (1) présente une température Ts > 1500°C, **caractérisé en ce que**
- la masse fondue métallique (1) et le laitier dans le récipient métallurgique (5) sont calmés pour démixtion au moins des phases de densités différentes masse fondue métallique (1), phase riche en phosphore (P1) et phase pauvre en phosphore (P2) ;
- la durée du calmage t/m_{schm} est > 8 min/kg, de préférence t/m_{schm} > 15 min/kg ;
- la phase la plus légère riche en phosphore (P1) est séparée des autres phases au moyen d'un dispositif mécanique, en particulier un déversoir (6), au moins la masse fondue métallique (1) restant dans le réacteur métallurgique (5).

2. Procédé selon la revendication 1,
**caractérisé en ce que**
le laitier présente une teneur en MgO (en % en poids) de 0,1 % à 10 %, de préférence de 5 % à 8 %.

3. Procédé selon l'une quelconque des revendications précédentes,
**caractérisé en ce que**
le laitier présente une teneur en CaF2 de 0 % à 7 %.

4. Procédé selon l'une quelconque des revendications 1 à 3,
**caractérisé en ce que**
le procédé est mis en œuvre dans un four à arc électrique.

5. Procédé selon l'une quelconque des revendications 1 à 3,
**caractérisé en ce que**
le procédé est mis en œuvre dans un convertisseur.

6. Procédé selon l'une quelconque des revendications 1 à 3,
**caractérisé en ce que**
le procédé est mis en œuvre dans une poche.

7. Procédé selon l'une quelconque des revendications 1 à 3,
**caractérisé en ce que**
le procédé est mis en œuvre dans un four à induction.

8. Procédé selon l'une quelconque des revendications précédentes,
**caractérisé en ce que**
le procédé est mis en œuvre dans un récipient métallurgique (5) ; et
la masse fondue métallique est influencée par induction.
